# EUROPÄISCHE PATENTSCHRIFT

(11) **EP 1 043 867 B1**
(45) Veröffentlichungstag und Bekanntmachung des Hinweises auf die Patenterteilung: **30.07.2008**
(21) Anmeldenummer: 00102477.7
(22) Anmeldetag: 04.02.2000
(51) Int. Cl.: H04L 12/403, G06F 13/42

(54) **Verfahren und Vorrichtung zur seriellen Daten-übertragung**
Method and apparatus for serial datacommunication
Procédé et dispositif de communication sérielle de data

(30) Priorität: 18.02.1999 DE 19906867
(43) Veröffentlichungstag der Anmeldung: 11.10.2000
(73) Patentinhaber: Micro Innovation AG, 9008 St. Gallen (CH)
(72) Erfinder: Rettig, Thomas, Dipl.-Ing., 33378 Rheda-Wiedenbrück (DE); Bellenhaus, Ralf, Dipl.-Ing., 59320 Ennigerloh (DE); Zebermann, Christian, Dr., 37688 Beverungen (DE); Cevik, Kemal, Prof. Dr., 33607 Bielefeld (DE); Penning, Karl-Friedrich, Dipl.-Ing., 32791 Lage (DE); Wagener, Ulrich, 31675 Bückeburg (DE); Steinkämper, Stefan, 32758 Detmold (DE); Hähnel, Holger, 33647 Bielefeld (DE)
(74) Vertreter: TER MEER - STEINMEISTER & PARTNER GbR

(56) Entgegenhaltungen:
- DE-A- 19 756 918
- US-A- 5 510 857
- US-A- 5 581 541

## Beschreibung

Die Erfindung betrifft ein Verfahren und eine Vorrichtung zur seriellen Datenübertragung gemäß den Obergebriffen der Patentansprüche 1 und 10.

Verfahren und Vorrichtungen zur seriellen Datenübertragung gehören bereits zum Stand der Technik.

Aus der DE 197 56 918 A1 ist bereits eine Kommunikations-Steuervorrichtung bekannt. In dieser Kommunikations-Steuervorrichtung, in der ein Stapelübertragungsrahmen in einem Batchmodus (Stapelmodus) von einer Master-Station zu einer Vielzahl von Slave-Stationen übertragen wird und individuelle Antwortrahmen von den entsprechenden Slave-Stationen zu der Master-Station übertragen werden, werden, wenn vorher ein Stapelübertragungsrahmen von der Master-Station übertragen worden ist, der eine Übertragungsanweisungsbezeichnung enthält, und die entsprechenden Slave-Stationen der Master-Station auch antworten, Antwortrahmen aufeinanderfolgend in einer kontinuierlichen Art und Weise, basierend auf der Übertragungsanweisungsbezeichnung übertragen, die von der Master-Station jedesmal, wenn die Übertragung des Antwortrahmens durch die Slave-Station vor der eigenen Slave-Station beendet ist, übertragen wird.

Ein weiteres System mit einer Master-Vorrichtung und mehreren Slave-Vorrichtungen, die durch einen Kommunikationsbus verbunden sind, ist aus der US-A-5 581 541 bekannt.

Jede Slave-Vorrichtung enthält eine adressierbare Port-Schaltung (Anschlussschaltung), die so betreibbar ist, dass sie den Kommunikationsbus mit einem Bus der Slave-Vorrichtung, der das gleiche Busprotokoll wie der Kommunikationsbus verwendet, verbindet oder den Kommunikationsbus von diesem Bus der Slave-Vorrichtung trennt. Jede adressierbare Port-Schaltung enthält einen primären Port (Primäransehluss), an den der Kommunkationsbus angeschlossen ist; einen sekundären Port (Sekundäranschluss), an den der Bus der Slave-Vorrichtung angeschlossen ist; eine Verbindungsvorrichtung, die an den primären Port und an den sekundären Port angeschlossen ist und so betreibbar ist, dass sie den Kommunikationsbus als Antwort auf ein Steuersignal mit dem Bus der Slave-Vorrichtung verbindet oder von diesem trennt; und eine Steuerschaltungsanordnung zum Erzeugen des Steuersignals als Antwort auf eine von der Master-Vorrichtung ausgegebene Wählsequenz (Auswahlsequenz), wobei die Master-Vorrichtung dann, wenn der Kommunikationsbus nicht für die normale Kommunikation gemäß dem Busprotokoll verwendet wird, auf den Kommunikationsbus unter Verwendung eines vom normalen Kommunikationsprotokoll verschiedenen Protokolls eine Wählsequenz senden kann, um die logische Adresse einer als nächstes zu wählenden Slave-Vorrichtung zu spezifizieren. Die Steuerschaltungsanordnung in jeder Slave-Vorrichtung ist so beschaffen, dass sie prüft, ob eine von der Master-Vorrichtung ausgegebene Adresse der logischen Adresse dieser Slave-Vorrichtung entspricht; wobei die Steuerschaltungsanordnung so beschaffen ist, dass sie, wenn diese Adresse nicht der logischen Adresse entspricht, an die Verbindungseinrichtung eine Nachricht sendet, um den Bus dieser Slave-Vorrichtung vom Kommunikationsbus zu trennen; und wobei die Schaltungsanordnung so beschaffen ist, dass sie dann, wenn diese Adresse der logischen Adresse entspricht, an die Verbindungseinrichtung eine Nachricht sendet, um den Bus dieser Slave-Vorrichtung mit dem Kommunikationsbus in der Weise zu verbinden, dass sie von dem System als ein einzelner Kommunkationsbus wahrgenommen werden.

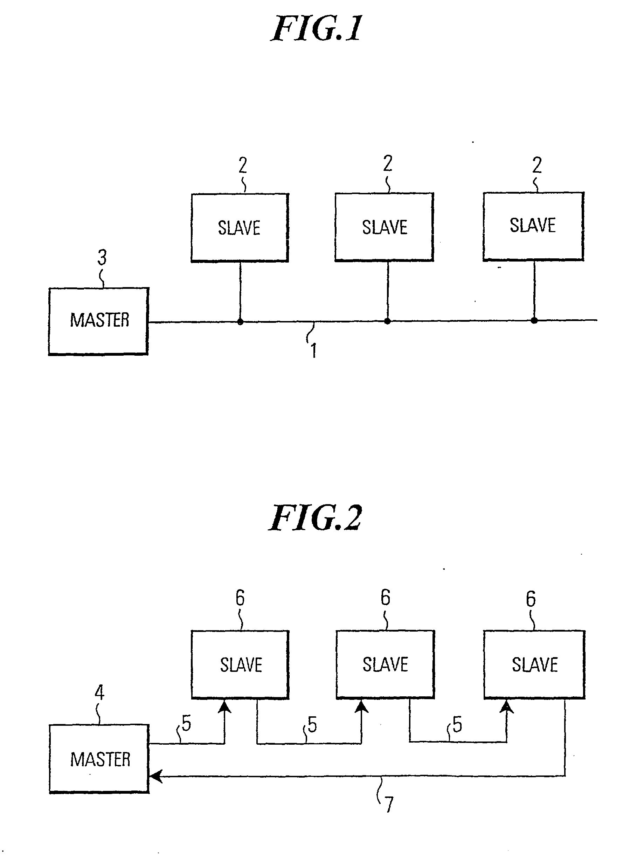

Die Figur 1 zeigt eine weitere herkömmliche und zur seriellen Datenübertragung geeignete Vorrichtung mit Linienstruktur.

Hier sind mit derselben Leitung 1 mehrere Slaves 2 verbunden, wobei die Leitung 1 über einen Master 3 mit seriellen Daten beschickt wird. Da alle Slaves auf derselben Leitung kommunizieren, wird für jeden Slave eine spezifische Adresse benötigt, damit er nur die Daten empfangen kann, die für ihn bestimmt sind, oder um von ihm gesendete Daten unter Bezugnahmen auf seine Adresse auswerten zu können.

Nachteilig bei der Linienstruktur ist es, dass für die jeweiligen Slaves feste Adressen benötigt werden. Darüber hinaus wird bei höheren Übertragungsraten in der Linienstruktur ein Busabschluss benötigt.

Eine noch weitere herkömmliche Vorrichtung zur seriellen Datenübertragung ist in Figur 2 angegeben. Es handelt sich hier um eine Vorrichtung mit Ringstruktur. Von einem Master 4 ausgehend wird eine Hinleitung 5 durch mehrere Slaves 6 hindurchgeführt, wobei vom letzten Slave eine Rückleitung 7 zum Master 4 gelegt ist. Bei der seriellen Datenübertragung unter Verwendung dieser Vorrichtung werden die vom Master 4 verschickten Daten durch jeden Slave 6 geleitet und vom letzten Slave über die Rückleitung 7 wieder zum Master 4 geführt. Bei dieser Art der Datenübertragung stellt die Vorrichtung praktisch ein Ringschieberegister dar.

Nachteilig an dieser Vorrichtung ist, dass ihre Reaktionszeit relativ lang ist. Dies liegt daran, dass der Bus als Ring ausgeführt ist, so dass sämtliche Daten erst durch alle Slaves 6 hindurchlaufen müssen, bevor sie wieder den Master 4 erreichen. Die Vorrichtung ist darüber hinaus hinsichtlich der Datenabfolge nicht konsistent, da vom Master 4 schon ein nächster Zyklus zum Aussenden neuer Daten gestartet wird, bevor von ihm die Daten des vorhergehenden Zyklus vollständig empfangen worden sind.

Der Erfindung liegt die Aufgabe zugrunde, ein Verfahren zur seriellen Datenübertragung zu schaffen, bei dem Slaves ohne feste Adressen zum Einsatz kommen können, und das zu kürzeren Reaktionszeiten führt. Dabei soll gleichzeitig sichergestellt sein, daß die verarbeiteten Daten konsistent bleiben, also keine Vermischung von Daten unterschiedlicher vom Master ausgesandter Zyklen auftritt.

Ferner ist das Ziel der Erfindung, eine zur Durchführung des Verfahrens geeignete Vorrichtung anzugeben.

Eine verfahrensartige Lösung der gestellten Aufgabe ist im Anspruch 1 angegeben. Dagegen findet sich eine vorrichtungsseitige Lösung der gestellten Aufgabe im Anspruch 10. Vorteilhafte Ausgestaltungen der Erfindung sind den jeweils nachgeordneten Unteransprüchen zu entnehmen.

Ein erfindungsgemäßes Verfahren zur seriellen Datenübertragung auf einem wenigstens eine Hinleitung und eine Rückleitung aufweisenden sowie mit mehreren Slaves verbundenen Bus, über dessen Hinleitung aufeinanderfolgende Datenrahmen für aufeinanderfolgende Slaves geschickt werden, zeichnet sich dadurch aus, daß jeder Slave den für ihn vorgesehenen Datenrahmen aus der Hinleitung ausblendet und diesen nach Verarbeitung direkt zur Rückleitung schickt. Dabei können auch mehrere Datenrahmen pro Slave vorgesehen sein, also nacheinander verarbeitet und umgeleitet werden. Wieviele Datenrahmen pro Slave vorgesehen sind, erkennt dieser infolge seiner Konfiguration.

Wird also vom Master ein aus mehreren hintereinanderliegenden Datenrahmen bestehendes Telegramm auf die Hinleitung geschickt, so gelangt der zuerst vom Master ausgesendete Datenrahmen nur zum ersten und benachbart zum Master liegenden Slave und wird von diesem direkt nach Bearbeitung über die Rückleitung zum Master zurückgeschickt. Der erste Datenrahmen gelangt also nicht zu den weiteren Slaves auf dem Bus. Der zweite vom Master ausgesandte Datenrahmen desselben Telegramms gelangt durch den ersten Slave hindurch zum zweiten Slave, wird von diesem verarbeitet und danach unmittelbar über die Rückleitung zum Master zurückgeschickt, ohne die weiteren Slaves auf dem Bus durchlaufen zu müssen, usw.. Auf der Rückleitung werden somit die jeweiligen Datenrahmen entsprechend ihrer ursprünglich ausgesandten Reihenfolge wieder zusammengestellt und gelangen in genau derselben zeitlichen Reihenfolge zum Master zurück, in der sie von ihm auch ausgesandt wurden. Hierdurch bleiben die Daten innerhalb eines Zyklus konsistent, und zwar hinsichtlich ihrer Reihenfolge und hinsichtlich der Tatsache, daß sie nicht mit Daten anderer Zyklen vermischt werden. Ein jeweiliger Zyklus wird dabei durch das Aussenden eines Aufruftelegramms und das Empfangen des Antworttelegramms durch den Master begrenzt. Darüber hinaus führt das Verfahren zu einer sehr kurzen Ansprechzeit, da die jeweiligen Datenrahmen nur diejenigen Slaves durchlaufen, in denen sie auch tatsächlich verarbeitet werden. Die beim erfindungsgemäßen Verfahren enthaltene Ansprechzeit ist somit erheblich kürzer als diejenige beim herkömmlichen System mit Ringstruktur. Sind mehr Datenrahmen als Slaves auf dem Bus vorhanden, so werden die überzähligen Datenrahmen beim letzten Slave auf dessen Ausgangsleitung (nicht auf die Rückleitung) geschickt und fallen weg. Daher ist auch kein spezieller Busabschluß, etwa ein Stecker oder ein spezielles Modul, erforderlich.

Nach einer Ausgestaltung der Erfindung können sowohl die Hinleitung als auch die Rückleitung durch die jeweiligen Slaves hindurch geführt werden. Die in den jeweiligen Slaves verarbeiteten und umgeleiteten Datenrahmen werden dann auf der durch die Slaves hindurchgeführten Rückleitung zum Master zurückgeschickt.

Möglich ist es aber auch, nur die Hinleitung durch die Slaves hindurchzuführen und die Rückleitung außerhalb der Slaves zu verlegen, wobei die Rückleitung dann über eine Stichleitung mit dem Ausgang eines jeweiligen Slaves verbunden ist. Im zuletzt genannten Fall werden also die verarbeiteten und umgeleiteten Datenrahmen auf der außerhalb der Slaves liegenden Rückleitung zum Master zurückgeschickt.

Gemäß einer Weiterbildung der Erfindung werden alle Slaves zur selben Zeit auf Empfang geschaltet, wonach sie dann auf die Ankunft der für sie jeweils vorgesehenen Datenrahmen warten. Dadurch, daß die Empfangsbereitschaft der Slaves zur selben Zeit initiiert wird, läßt sich die Reaktionszeit des Busses 1 weiter verringern.

Dabei können die Slaves durch einen auf der Hinleitung zuerst verschickten Startrahmen auf Empfang geschaltet werden, der den Datenrahmen vorausgeht. Dieser Startrahmen gelangt praktisch gleichzeitig zu alles Slaves auf dem Bus, wonach die Slaves der Reihe nach durch die für sie jeweils vorgesehenen Datenrahmen aktiviert werden.

Möglich ist aber auch, daß die Slaves durch ein an die Rückleitung angelegte Steuersignal gleichzeitig auf Empfang geschalten werden, das vor der Verschickung der Datenrahmen ausgegeben wird. Bei der Rückleitung kann es sich dabei sowohl um die durch die Slaves hindurchgeführte Rückleitung als auch um die an den Slaves vorbeigeführte Rückleitung handeln.

In weiterer Ausgestaltung der Erfindung enthält jeder Datenrahmen ein an erster Position liegendes Startbit und ein an letzter Position liegendes Stopbit, so daß eine asynchrone Datenübertragung möglich ist. Anstelle eines letzten Stopbits können auch mehrere Stopbits verwendet werden.

Nach einer sehr vorteilhaften Weiterbildung der Erfindung sind dabei alle Datenrahmen identisch strukturiert, wobei auch alle Slaves in gleicher Weise bei der Ausblendung und Umleitung der für sie vorgesehenen Datenrahmen arbeiten können. Vorzugsweise sind alle Slaves identisch ausgebildet. Dies führt zu einem vereinfachten Betriebsablauf und Systemaufbau.

Eine erfindungsgemäße Vorrichtung zur seriellen Datenübertragung mit einem wenigstens eine Hinleitung und eine Rückleitung aufweisenden Bus, mehreren mit dem Bus verbundenen Slaves, und einem mit dem Bus verbundenen Master, der über die Hinleitung aufeinanderfolgende Datenrahmen für aufeinanderfolgende Slaves verschickt und über die Rückleitung von den Slaves kommende Datenrahmen empfängt, zeichnet sich dadurch aus, daß jeder Slave folgendes enthält:
- eine mit der Hinleitung verbundene Ausblendeinrichtung zur Ausblendung des für ihn vorgesehenen Datenrahmens aus der Hinleitung;
- eine Bearbeitungseinrichtung zur Bearbeitung des ausgeblendeten Datenrahmens; und
- eine mit der Rückleitung verbundene Umleiteinrichtung zur Umleitung des von der Bearbeitungseinrichtung bearbeiteten Datenrahmens direkt zur Rückleitung.

Durch die Ausblendeinrichtung wird dafür gesorgt, daß nach Empfang des Startrahmens und des für den jeweiligen Slave vorgesehenen Datenrahmens dieser Datenrahmen nicht zum nächsten Slave gelangt sondern nur in demjenigen Slave verbleibt und verarbeitet wird, der für ihn vorgesehen ist. Zur Bearbeitung des im Slave verbleibenen Datenrahmens ist die Bearbeitungseinrichtung vorgesehen, die aus dem empfangenen Datenrahmen Daten ausliest, um zum Beispiel mit dem Slave verbundene Aktoren zu steuern, oder Daten in den vorhandenen Datenrahmen neu einschreibt, etwa von einem mit dem Slave verbundenen Sensor. Nachdem dies geschehen ist, wird der auf diese Weise neu gefüllte Datenrahmen von diesem Slave direkt zur Rückleitung geschickt, und zwar über die im Slave vorhandene Umleiteinrichtung, die diesbezüglich von der Bearbeitungseinrichtung entsprechend ansteuerbar ist. Im Anschluß daran wird dieser Slave im Bereich der Hinleitung wieder auf Durchgang geschaltet, die Ausblendeinrichtung wird also wieder deaktiviert, so daß dann der nächste Datenrahmen durch diesen Slave hindurch zum nächsten Slave gelangen kann. Dort erfolgt ein entsprechender Bearbeitungsprozeß bezüglich dieses Datenrahmens. Bezogen auf den ersten Slave wird der von diesem Slave empfangene erste Datenrahmen um etwas mehr als die Länge des ersten Datenrahmens verzögert zum Master zurückgeschickt, so daß bei diesem System eine außerordentlich kurze Ansprechzeit erhalten wird. Da in allen Slaves derselbe Bearbeitungsprozeß erfolgt, folgen auf der Rückleitung dem ersten Datenrahmen die nächsten Datenrahmen in denselben Zeitabständen, wie dies auch beim Aussenden des Telegramms auf der Hinleitung der Fall war. Sämtliche Telegrammdaten bleiben somit konsistent bzw. in sich geschlossen.

Statt der Synchronisation durch Verwendung eines Startrahmens könnte diese auch in anderer Weise erfolgen, z. B. durch spezielle Ruhepegel auf der Hin- oder Rückleitung.

Vorzugsweise kann die Ausblendeinrichtung einen Ausblendschalter zur Unterbrechung der Hinleitung aufweisen. Dies führt zu einem einfachen Aufbau.

Die Ausblendeinrichtung kann nach einer Ausgestaltung der Erfindung eine Erkennungsschaltung zum Erkennen eines vor allen Datenrahmen übertragenen Startrahmens aufweisen, um bei Erkennung des Startrahmens den Ausblendschalter in die Unterbrechungsposition zu bringen. Dabei kann die Erkennungsschaltung ein zu Beginn eines jeweiligen Datenrahmens liegendes Startbit erkennen und abhängig davon einen Zähler aufziehen, der nach Zählablauf den Ausblendschalter wieder in seine die Hinleitung verbindende bzw. schließende Position bringt.

Durch die Steuerung über das Starbit und bei geeigneter Einstellung des Zählwertes des Zählers kann somit erreicht werden, daß exakt nach Abschluß der Bearbeitung des für den jeweiligen Slave vorgesehenen Datenrahmens dieser Slave im Bereich der Hinleitung wieder auf Durchgang geschaltet wird, um dann den nächsten Datenrahmen für den nachfolgenden Slave hindurchzulassen. Dadurch läßt sich auch bei asynchroner Datenverarbeitung die Reaktionszeit des Systems kurz halten.

Vorzugsweise weisen alle Slaves den gleichen oder sogar identischen Aufbau auf, was zur Reduzierung der Systemkosten und zu einer Vereinfachung des Verarbeitungszyklus der Datenrahmen führt. Als Umleiteinrichtung kann z. B. ein mehrpoliger, vorzugsweise dreipoliger Umschalter verwendet werden.

Ausführungsbeispiele der Erfindung werden nachfolgend unter Bezugnahme auf die Zeichnung im einzelnen beschrieben. Es zeigen:
**Figur 1** ein serielles Datenübertragungssystem mit Linienstruktur nach dem Stand der Technik;
**Figur 2** ein serielles Datenübertragungssystem mit Ringstruktur nach dem Stand der Technik;
**Figur 3** ein serielles Datenübertragungssystem nach einem ersten Ausführungsbeispiel der vorliegenden Erfindung;
**Figur 4** ein serielles Datenübertragungssystem nach einem zweiten Ausführungsbeispiel der vorliegenden Erfindung;
**Figur 5** ein serielles Datenübertragungssystem nach einem dritten Ausführungsbeispiel der vorliegenden Erfindung;
**Figur 6** ein bei der Erfindung verwendetes Telegramm aus einem vorangehenden Startrahmen und mehreren nachfolgenden Datenrahmen; **Figur 7** ein detaillierteres Blockschaltbild des ersten Ausführungsbeispiels der vorliegenden Erfindung;
**Figur 8** eine vergrößerte Darstellung des Blockschaltbildes nach Figur 7 im Bereich der Slaves;
**Figur 9** Signaldiagramme für die Blockschaltbilder nach den Figuren 7 und 8 für den Fall, daß drei Slaves vorhanden sind und ein Telegramm aus einem Startrahmen und drei Datenrahmen besteht; und
**Figur 10** ein weiteres Blockschaltbild zur Erläuterung des internen Aufbaus eines jeweiligen Slaves.

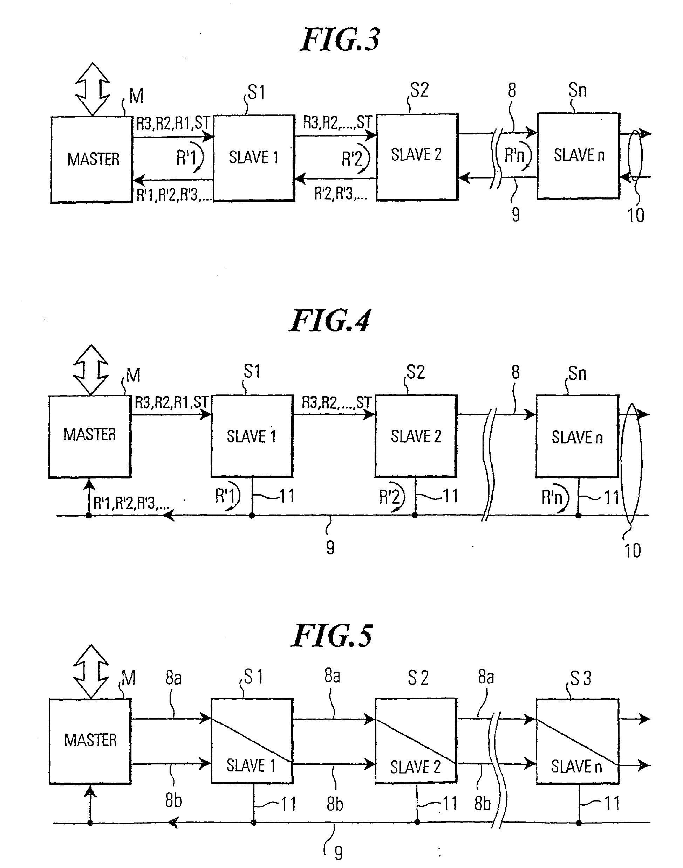

Die Figur 3 zeigt ein erstes Ausführungsbeispiel einer erfindungsgemäßen Vorrichtung zur seriellen Datenübertragung.

Zu dieser Vorrichtung gehören ein Master M und mehrere Slaves S 1, S2,..., Sn. Die Slaves S1, S2,..., Sn sind mit einem aus einer Hinleitung 8 und einer Rückleitung 9 bestehenden Bus 10 verbunden, der seinerseits mit dem Master M verbunden ist. Dabei sind Hinleitung 8 und Rückleitung 9 durch sämtliche der Slaves S1, S2,..., Sn hindurchgeführt.

Im Betrieb schickt der Master M zunächst ein Telegramm auf die Hinleitung 8, das aus einem führenden Startrahmen ST und mehreren aufeinanderfolgenden Datenrahmen R1, R2, R3... besteht. In der Regel enthält das Telegramm soviele Datenrahmen wie Slaves auf dem Bus vorhanden sind. In diesem Fall schickt also der Master M innerhalb des Telegramms n Datenrahmen R1, R2,..., Rn auf die Hinleitung 8.

Durch den führenden Startrahmen ST werden zunächst alle Slaves S1, S2,..., Sn im wesentlichen gleichzeitig auf Empfang geschaltet und warten dann auf den für sie vorgesehenen Datenrahmen R1, R2..., Rn. Sobald der Slave S1 den für ihn vorgesehenen ersten Datenrahmen R1 empfängt, legt er seinen zum nächsten Slave S2 führenden Ausgang auf hohen logischen Pegel, so daß dieser praktisch gesperrt ist. Der Datenrahmen R1 wird dann im Slave S1 verarbeitet und nach Ablauf einer dafür vorbestimmten Zeit als Datenrahmen R'1 direkt zur Rückleitung 9 und damit zum Master M zurückgeschickt. Der Master M empfängt also schon nach Ablauf der zuvor genannten vorbestimmten Zeit den Datenrahmen R'1, wobei die vorbestimmte Zeit etwas größer ist die Länge dieses Datenrahmens R'1, da dieser ja noch im Slave verarbeitet werden muß.

Mit Beendigung der Bearbeitung des Datenrahmens R1 im Slave S1 wird die Hinleitung 8 im Slave S 1 wieder auf Durchgang geschaltet, so daß jetzt der Datenrahmen R2 zum Slave S2 gelangen kann. Dieser Datenrahmen R2 wird dann im Slave S2 in gleicher Weise wie der Datenrahmen R1 im Slave S 1 verarbeitet und danach als Datenrahmen R'2 unmittelbar auf die Rückleitung 9 geschickt, um durch den Slave S1 hindurch zum Master M zu gelangen. Die Zeit zwischen den Datenrahmen R'1, R'2 auf der Rückleitung 9 ist dabei praktisch dieselbe wie die entsprechende Zeit auf der Hinleitung 8. Während der Bearbeitung des Datenrahmens R2 im Slave S2 wird auch dessen Ausgang zum nächsten Slave auf einen Ruhepegel, z.B. auf einen hohen logischen Pegel gelegt und damit gesperrt. Nach Beendigung der Bearbeitung des Datenrahmens R2 im Slave S2 wird dann dessen Ausgang zum nächsten Slave wieder freigegeben, so daß schließlich der Datenrahmen R3 über den Slave S2 zum anschließenden Slave S3 weitergeleitet werden kann. Die Hinleitung 8 ist zu dieser Zeit im Bereich des Slaves S 1 nicht unterbrochen.

Der Vorgang wiederholt sich solange, bis auch der letzte Datenrahmen Rn den letzten Slave Sn erreicht hat und dort verarbeitet wurde. Mit Übersendung des letzten Datenrahmens R'n vom Slave Sn zum Master M über die vorhergehenden Slaves ist ein Datenzyklus beendet.

Bei großer Anzahl der Slaves kann bedingt durch die Leitungslänge auch eine Taktauffrischung bzw. Auffrischung der Datenrahmen von Slave zu Slave erfolgen.

Sämtliche Datenrahmen R1, R2,..., Rn sind identisch aufgebaut und weisen dieselbe Länge auf. Demzufolge arbeiten auch sämtliche Slaves in identischer Weise. Der Startrahmen ST ist der einzige Rahmen, der nicht zum Master zurückgesendet wird.

Die Figur 4 zeigt ein zweites Ausführungsbeispiel einer erfindungsgemäßen Vorrichtung. Im Unterschied zum Ausführungsbeispiel nach Figur 3 ist jetzt die Rückleitung 9 nicht durch die jeweiligen Slaves hindurchgeführt sondern an diesen vorbeigelegt. Dabei ist die Rückleitung 9 lediglich über Stichleitungen 11 mit den Slaves verbunden. Beim Ausführungsbeispiel nach Figur 4 kann darüber hinaus die Synchronisierung der Slaves auch über diese Rückleitung 9 erfolgen. Hierbei wird dann kein spezieller Startrahmen gesendet, sondern die Slaves werden über ein Signal, das für eine vorbestimmte Zeit auf hohen oder niedrigen logischen Pegel gelegt wird, auf der Rückleitung synchronisiert bzw. auf Empfang geschaltet. Danach wartet wiederum jeder Slave auf den für ihn vorgesehenen Datenrahmen.

Das dritte Ausführungsbeispiel nach Figur 5 entspricht dem zweiten Ausführungsbeispiel nach Figur 4, jedoch sind jetzt zwei Hinleitungen 8a und 8b vorgesehen, wobei der Master M zwei Ausgänge und jeder der Slaves S1, S2,..., Sn zwei für die Hinleitungen 8a, 8b vorgesehene Eingänge und Ausgänge aufweist. Im Bereich jeweiliger Steckplätze für die Slaves ist in Datenübertragungsrichtung die vor einem Steckplatz liegende Hinleitung 8a mit der hinter dem Steckplatz liegenden Hinleitung 8b verbunden, während andererseits die jeweiligen Slaves an ihren Eingängen eine Prüfeinrichtung aufweisen, mit der sich feststellen läßt, an welchem der Eingänge Daten erhalten werden. Bei Besetzung aller Steckplätze sind nur die mit der Hinleitung 8a verbundenen Eingänge der jeweiligen Slaves auf Empfang geschaltet. Empfängt jedoch ein Slave über diesen Eingang keine Daten, sondern erhält er an seinem anderen Eingang Daten, der mit der Hinleitung 8b verbunden ist, so kann er daraus schließen, daß ein vor ihm liegender Slave gezogen ist, also nicht am Bus vorhanden ist. In diesem Fall liefert der diesen Zustand detektierende Slave ein Fehlersignal über die Rückleitung 9 zum Master. Empfängt der Slave weder an seinem mit der Hinleitung 8a noch an seinem mit der Hinleitung 8b verbundenen Eingang Daten, so kann er daraus schließen, daß mehr als ein Slave gezogen sind, um ein entsprechendes Fehlersignal zum Master zu übertragen.

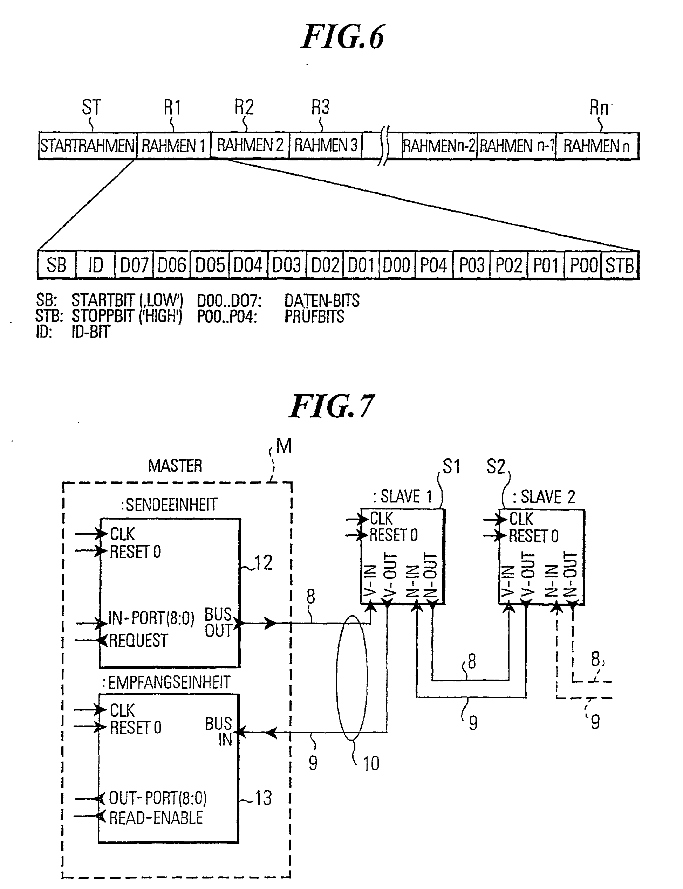

Im nachfolgenden soll unter Bezugnahme auf die Figur 6 ein beim erfindungsgemäßen Verfahren vom Master ausgesandtes Telegramm näher beschrieben werden. Dieses Telegramm besteht aus einem Startrahmen ST und mehreren unmittelbar aufeinanderfolgenden Datenrahmen R1, R2, ..., Rn. Um einen einheitlichen Aufbau der Slaves zu ermöglichen, wird eine feste Rahmenlänge wenigstens der Datenrahmen verwendet. Digitale I-O Module können z. B. acht Informationsbits enthalten, so daß die jeweiligen Rahmen acht Informationsbits D00, D01,..., D07 aufweisen. Die Redundanz wird somit möglichst gering gehalten und die Datenverarbeitungsgeschwindigkeit erhöht. Zusätzlich ist in jedem Rahmen ein ID Bit vorgesehen, durch das die Möglichkeit geschaffen wird, Steuerworte und Fehlermeldungen von einem Datenrahmen zu unterscheiden. Da weiterhin getrennte Taktquellen beim Sender und Empfänger vorhanden sein können, werden die Daten asynchron mit Startbit SB und Stopbit StB übertragen. Die acht Informationsbits und das ID-Bit müssen mit 5 Bits abgesichert werden, so daß eine Übertragung mit Hamming-Distanz 4 pro Datenrahmen gewährleistet ist. Somit ergibt sich eine Datenrahmenlänge von 16 Bit, die sich aus jeweils einem Start- und einem Steuerbit SB, StB, einem ID-Bit, 8 Datenbits D00, ..., D07 und fünf Prüfbits P00,..., P04 zusammensetzt.

Um den Anfang eines neuen Telegramms zu kennzeichnen, muß in diesem an erster Stelle ein reserviertes Datenwort gesendet werden. Es handelt sich hier um den Startrahmen ST. Dieser spezielle Rahmen besitzt eine Bitfolge, die nur einmal im Telegramm vorkommt und somit eindeutig zu identifizieren ist. Jeder der Slaves hat eine Startrahmen-Erkennung, durch welche der Slave auf den Beginn der Rahmenübertragung vorbereitet wird. Der letzte Slave sendet den Startrahmen ST auf die offene Nachfolgerleitung. Somit ist der Startrahmen ST der einzige Rahmen, der nicht zum Master zurückkommt. Hierdurch entsteht eine Lücke zwischen aufeinanderfolgenden Telegrammen, die vom Muster z. B. zur Konvertierung der Daten für den Feldbus oder anderen Berechnungen von vorgeschalteten Einheiten genutzt werden kann.

Nachfolgend sollen Aufbau und Arbeitsweise der erfindungsgemäßen Vorrichtung nach dem ersten Ausführungsbeispiel unter Bezugnahme auf die Figuren 7 bis 10 näher erläutert werden, wobei das Telegrammformat gemäß Figur 6 zum Einsatz kommt.

Der Master M hat die Aufgabe, die Kommunikation mit den Slaves herzustellen. Hierzu muß er einerseits die zu versendenden Daten in Datenrahmen packen, und andererseits muß er den empfangenen seriellen Datenstrom auswerten und die entsprechenden Nutzbits extrahieren. Im vorliegenden Fall gemäß Figur 7 besteht der Master M aus zwei Einheiten, nämlich aus einer Sendeeinheit 12 und einer Empfangseinheit 13. Über einen Ausgang BUSOUT der Sendeeinheit 12 wird ein Datentelegramm gemäß Figur 6 auf die Hinleitung 8 des Busses 10 geschickt, die mit einem Hinleitungseingang V-IN des Slaves S1 verbunden ist. Dessen Hinleitungsausgang N-OUT ist über einen weiteren Abschnitt der Hinleitung 8 mit einem Hinleitungseingang V-IN des nächsten Slaves S2 verbunden, und so weiter.
Dagegen ist ein Eingang BUSIN der Empfangseinheit 13 über die Rückleitung 9 des Busses 10 mit einem Rückleitungsausgang V-OUT des ersten Slaves S 1 verbunden, dessen Rückleitungseingang N-IN über einen weiteren Abschnitt der Rückleitung 9 mit einem Rückleitungsausgang V-OUT des nächsten Slaves S2 verbunden ist, und so weiter.

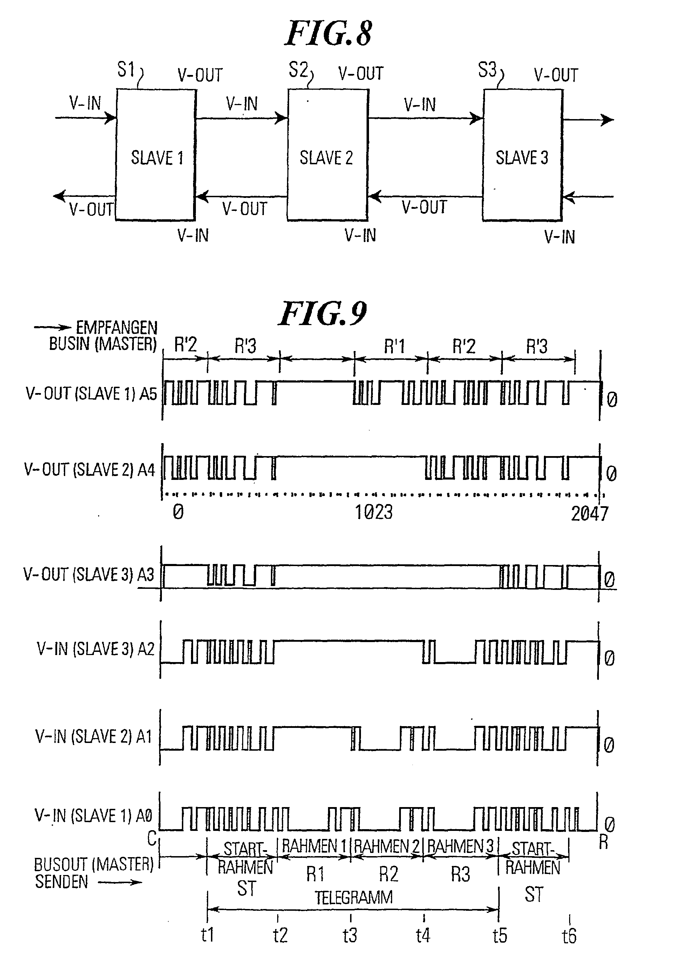

Die Figur 8 zeigt die Leitungsverbindungen im Bereich der Slaves in deutlicherer Form, wobei nur drei Slaves S1, S2 und S3 vorhanden sein sollen. Entsprechend sendet die Sendeeinheit 12 in Figur 7 auch nur ein Datentelegramm bestehend aus einem Startrahmen und drei aufeinanderfolgenden Datenrahmen R1, R2 und R3, wie in Figur 9 in der letzten Zeile zu erkennen ist. Es sein darauf hingewiesen, daß es sich hier nur um ein Beispiel handelt. Sind mehr als drei Slaves auf dem Bus 10 vorhanden, so enthält das Telegramm entsprechend mehr Datenrahmen.

Die Figur 9 zeigt die Signale an den jeweiligen Ein- und Ausgängen des Masters M und der Slaves für den Fall, daß drei Slaves S1, S2 und S3 mit dem Bus 10 verbunden sind. Das von der Sendeeinheit 12 über den Ausgang BUSOUT ausgesandte Telegramm ist in der letzten Zeile in Figur 9 zu erkennen. Es enthält hier einen 16 Bit langen Startrahmen ST und jeweils unmittelbar aufeinanderfolgend drei jeweils 16 Bit lange Datenrahmen R1, R2 und R3, deren Aufbau dem Aufbau in Figur 6 entspricht.

Man erkennt anhand der ersten Zeile von Figur 9, daß die Empfangseinheit 13 des Masters M an ihrem Eingang BUSIN den ersten Datenrahmen R1 schon nach etwa 32 Bit wieder empfängt. An diesen empfangenen Datenrahmen R'1 schließen sich unmittelbar die weiteren Datenrahmen R'2 und R'3 an, so daß einerseits die Ansprechzeit des Systems relativ kurz ist und andererseits seine Konsistenz gewahrt bleibt.

Das Signaldiagramm in Figur 9 zeigt weiter, daß der über den Ausgang BUSOUT ausgesandte Startrahmen alle Slaves S1, S2 und S3 gleichzeitig erreicht, und zwar an deren jeweiligen Hinleitungseingängen V-IN. Sämtliche Slaves werden nach der Erkennung dieses Startrahmens ST auf Empfang geschaltet. Dies geschieht zum Zeitpunkt t2.

In der unmittelbar darauffolgenden Zeitperiode t2 → t3, in der der erste Rahmen R 1 zum Slave S 1 übertragen wird, liegen die Ausgänge der Slaves S1, S2 und S3 auf einem festen logischen Pegel, so daß auch die Eingänge V-IN der Slaves 2 und 3 auf einem festen logischen Pegel liegen, wie zu erkennen ist. Das bedeutet, daß der Datenrahmen R 1 aus der Hinleitung 8 ausgeblendet ist und jetzt im Slave S 1 verarbeitet wird. Solange der Empfang des Datenrahmens R1 im Slave S1 während der Zeitperiode t2 → t3 dauert, bleibt der Ausgang V-OUT des Slaves S 1 auf einem festen logischen Pegel. Dies gilt auch für die weiteren Ausgänge V-OUT der Slaves S2 und S3.

Wie in der Zeitperiode t3 → t4 angegeben, gelangt jetzt der zweite Datenrahmen R2 an den Eingang V-IN des Slaves 1 und gleichzeitig an den Eingang V-IN des Slaves 2, während gleichzeitig der verarbeitete Datenrahmen R'1 aus dem Slave S1 über dessen Ausgang V-OUT zum Master M zurückgeschickt wird. Der Eingang V-IN des Slaves S3 und der Ausgang V-OUT des Slaves 2 bleiben auf einem festen logischen Pegel, so daß vom Slave S2 noch nichts zum Master M ausgegeben wird.

In der Zeitperiode t4 → t5 gelangt schließlich der dritten Datenrahmen R3 über die Eingänge V-IN der Slaves S1 und S2 an den Eingang V-IN des Slaves S3, wie im unteren Teil der Figur 9 zu erkennen ist. Während dieser Zeit liefert der Slave S2 über seinen Ausgang V-OUT den Datenrahmen R'2 zum Master M, und zwar über den Slave S1. Vom Ausgang V-OUT des Slaves S3 wird zu diesem Zeitpunkt noch nichts geliefert, da er weiterhin auf einem festen logischen Pegel verbleibt.

Während der Zeitperiode t5 → t6 wird dann auch der Ausgang V-OUT des Slaves 3 durchgeschaltet, so daß über ihn der verarbeitete Datenrahmen R'3 über die Slaves S2 und S1 zum Master M geschickt wird. Während dieser Zeit t5 → t6 wird bereits der neue Startrahmen ST des nächsten Telegramms vom Master M ausgegeben.

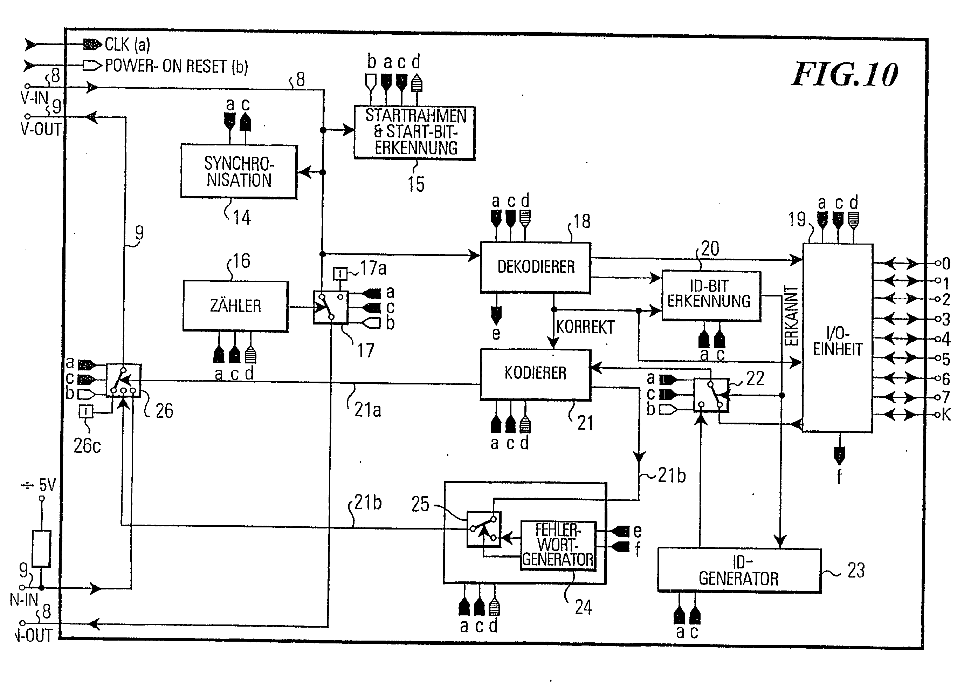

Anhand des in Figur 10 dargestellten Blockdiagramms soll nachfolgend der Aufbau eines jeweiligen Slaves näher erläutert werden. Zu erkennen sind der Hinleitungseingang V-IN, der Hinleitungsausgang N-OUT, der Rückleitungseingang N-IN und der Rückleitungsausgang V-OUT. Als wesentlichste Schaltwerke enthält ein jeweiliger Slave eine Synchronisationseinrichtung 14, eine Startrahmen- und Startbit-Erkennungseinrichtung 15, einen Zähler 16, einen vom Zähler ansteuerbaren Umschalter 17, einen Dekodierer 18, eine I/O-Einheit 19, eine ID-Bit-Erkennungseinrichtung 20, einen Kodierer 21, einen Umschalter 22, einen ID-Generator 23, einen Fehler-Wort-Generator 24 sowie einen von diesem ansteuerbaren Umschalter 25. Durch den Kodierer 21 ist darüber hinaus eine Umleiteinrichtung 26 ansteuerbar, die vorliegend in Form eines dreipoligen Umschalters ausgebildet ist. Die I/O-Einheit 19 ist ferner z. B. mit acht Kontakten 0 bis 7 sowie einem zusätzlichen Kontakt K ausgestattet, über die eine Verbindung zu einem Aktor oder einem Sensor herstellbar ist. Die Slaves können aber auch mehr als acht Ein- oder Ausgänge besitzen. Dann müssen sie dementsprechend viele Datenrahmen empfangen.

Es soll nun die Arbeitsweise eines derartigen Slaves im einzelnen beschrieben werden, und zwar unter Bezugnahme auf das in Figur 6 dargestellte Telegramm.

Dazu sei angenommen, daß zu einem bestimmten Zeitpunkt bei jedem Slave der Hinleitungseingang V-IN und der Hinleitungsausgang N-OUT über einen Schaltkontakt des Umschalters 17 miteinander verbunden sind. Der Schalter 17 befindet sich dann in der in Figur 10 gezeigten Stellung. Wird jetzt der Startrahmen ST über den Ausgang BUSOUT der Sendereinheit 12 des Masters M auf die Hinleitung 8 gegeben, so gelangt dieser während der Zeitperiode t1 → t2 in Figur 9 zur Startrahmen- und Start-Bit-Erkennungseinrichtung 15 des ersten Slaves S1 und weiter über den Schalter 17 des ersten Slaves auch zu den Startrahmen- und Start-Bit-Erkennungseinrichtungen 15 aller weiterer Slaves.

Durch die Startrahmen- und Start-Bit-Erkennungseinrichtungen 15 werden dann nach Erkennung des Startrahmens ST die in den jeweiligen Slaves vorhandenen Umschalter 17 so umgeschaltet, daß auf den jeweiligen Hinleitungsausgängen N-OUT ein Signal mit einem festen logischen Pegel erscheint. Mit anderen Worten wird in jedem Slave der mit dem Hinleitungsausgang N-OUT verbundene gemeinsame Schaltkontakt des Umschalters 17 mit einer Spannungsquelle 17a verbunden, die ein Signal auf einem festen logischen Pegel ausgibt. Die Figur 9 läßt erkennen, daß in der Zeitperiode t2 → t3 alle Ausgänge V-OUT der Slaves S 1, S2 und S3 auf einem festen logischen Pegel liegen. Das bedeutet aber auch, daß während dieser Zeitperiode t2 → t3 die Eingänge V-IN der Slaves S2 und S3 auf einem festen logischen Pegel liegen.

Handelt es sich bei dem in Figur 10 dargestellten Slave um den ersten Slave S1, so empfängt dieser nach dem Startrahmen in der Zeitperiode t2 → t3 auch den ersten Datenrahmen R1.

Die Startrahmen- und Start-Bit-Erkennungseinrichtung 15 spricht jetzt sofort auf das an vorderster Stelle des Datenrahmens R1 liegende Startbit SB an und zieht den Zähler 16 auf. Dies erfolgt derart, daß der Zähler 16 nach weiteren 16 Bits den Kontakt des Schalters 17 von der Spannungsquelle 17a trennt und ihn wieder mit dem Eingang V-IN dieses Slaves verbindet. Solange der Zähler 16 die 16 Bits jedoch noch nicht heruntergezählt hat, bleiben die Kontakte V-IN und N-OUT dieses Slaves voneinander getrennt. Während dieser Zeit t2 → t3 wird also der Datenrahmen R1 für den Slave S1 vom Bus ausgeblendet und im Dekodierer 18 dekodiert. Das Startbit SD wird nicht zum Dekodierer 18 übertragen, so daß dieser als erstes das ID-Bit empfängt und identifiziert und danach die nächsten acht Nutzbits D07, D06,..., D00 in die I/O-Einheit 19 schiebt, in der sie bis zur Freigabe durch den Dekodierer gespeichert bleiben. Nach weiteren fünf Bits hat der Dekodierer 18 festgestellt, ob der empfangene Datenrahmen korrekt war. Dann können die Nutzbits von der I/O-Einheit 19 im Falle eines mit ihr verbundenen Aktors zu diesem ausgegeben werden, oder im Falle eines mit ihr verbundenen Sensors in diese eingelesen werden. Damit ist das Ende t3 der ersten Rahmenperiode t2 → t3 erreicht. Während dieser Zeitperiode t2 → t3 wurde der Rückleitungsausgang V-OUT aller Slaves über den jeweiligen Umschalter 26 mit einer Spannungsquelle 26a verbunden, die auf einem festen logischen Pegel lag. Mit anderen Worten bestand keine Verbindung zwischen dem Rückleitungseingang N-IN und dem Rückleitungsausgang V-OUT.

Sind 16 Bits seit der Erkennung des Startbits SB des ersten Datenrahmens R1 vorüber, legt der Zähler 16 zunächst den Umschalter 17 so, daß durch ihn wieder der Hinleitungsein- und -ausgang V-IN und N-OUT miteinander verbunden werden. Dies geschieht aber nur im ersten Slave S1, da in den weiteren Slaves die entsprechenden Zähler 16 nicht aufgezogen worden sind. Damit beginnt die Rahmenperiode t3 → t4 in Figur 9. Einerseits kann jetzt der zweite Datenrahmen R2 über den Schalter 17 des ersten Slaves S 1 zum zweiten Slave S2 geschickt werden, damit im zweiten Slave S2 die Startrahmen- und Start-Bit-Erkennungseinrichtung 15 das Startbit SB des zweiten Datenrahmens R2 erkennen kann. Gleichzeitig läuft aber im Slave S 1 während der Zeitperiode t3 → t4 der Kodiervorgang ab. Zu Beginn der Zeitperiode t3 → t4 wird der Kodierer 21 freigegeben, der entweder die Information aus der I/O-Einheit 19 oder die aus dem ID-Generator 23 erhaltene Identifikation kodiert. Zu diesem Zweck sind Kodierer 21 und I/O-Einheit 19 sowie der ID-Generator 23 über einen zweipoligen Umschalter 22 miteinander verbunden. Im Falle eines mit der I/O-Einheit 19 verbundenen Aktors werden somit die vorher empfangenen Daten kodiert, bei einem mit der I/O-Einheit 19 verbundenen Sensor die eingelesenen Daten. Durch den Kodierer 21 wird dabei der Umschalter 26 umgeschaltet, sobald der Kodierer 21 mit dem Rausschreiben der kodierten Daten beginnt, so daß jetzt der die kodierten Daten enthaltene Datenrahmen R1 über den Umschalter 26 und den Rückleitungsausgang V-OUT des Slaves S1 zurück zum Master M gelangt. Nach Beenden der Rücksendung des Datenrahmens R1 durch den Kodierer 21 bzw. nach Ablauf der Zeitperiode t3 → t4 wird der Umschalter 26 in seine dritte Schaltstellung gebracht, in der nunmehr der Rückleitungseingang N-IN des ersten Slaves S1 mit seinem Rückleitungsausgang V-OUT verbunden ist.

Während der Zeitperiode t3 → t4 laufen im zweiten Slave S2 bezüglich des ankommenden Datenrahmens R2 dieselben Vorgänge ab, wie diejenigen, die bei der Bearbeitung des ankommenden Datenrahmens R1 im ersten Slave S 1 während der Zeitperiode t2 → t3 abgelaufen sind. Es erfolgt also wiederum eine Ausblendung des zweiten Datenrahmens R2 aus dem Bus und eine anschließende Rücksendung zum Master während der Zeitperiode t4 → t5.

Entsprechendes wiederholt sich für den dritten Datenrahmen R3 im Slave S3 während der Zeitperioden t4 → t5 und t5 → t6.

Das Ausblenden der jeweiligen Datenrahmen R1, R2 und R3 aus dem Bus erfolgt also mit Hilfe der durch die Zähler 16 gesteuerten Umschalter 17, die jeweils von Slave zu Slave für die Länge des jeweiligen Datenrahmens den Hinleitungsausgang N-OUT vom Hinleitungseingang V-IN des jeweiligen Slaves trennen. Zur Ausblendeinrichtung im Sinne der Erfindung gehören somit die Schaltwerke 15, 16 und 17, während zur Umleiteinrichtung der dreipolige Umschalter 26 gehört.

Selbstverständlich muß während des gesamten Betriebs des Systems die Synchronisation laufen. Es wird aber jede steigende und fallende Flanke auf der V-IN Leitung 8 erkannt. Zwei interne Takte später wird ein SYNC-Signal erzeugt. Falls keine Flankenwechsel vorhanden sind, wird nach vier internen Takten das SYNC-Signal erzeugt. Dieses Signal wird zusammen mit dem internen Takt zur Synchronisation der Slaves verwendet, was bedeutet, daß alle Zugriffe auf das Bussignal nur durchgeführt werden können, wenn das SYNC-Signal vorhanden ist. Jedes Schaltwerk im Blockdiagramm nach Figur 10 empfängt das Synchronisationssignal SYNC, das mit dem Buchstaben c bezeichnet ist und von der Synchronisationeinrichtung 14 ausgegeben wird, die ihrerseits das Taktsignal a bzw. clk von außen empfängt.

Falls beim Dekodieren ein Fehler oder in der I/O-Einrichtung 19 ein Kurzschluß im Aktor erkannt wird, schaltet der Fehler-Wort-Generator 24 die Rückleitung V-OUT um. Es werden dann nicht die kodierten Informationen sondern ein Fehlerwort an den Master zurückgesendet.

Alle Slaves sind vom grundsätzlichen Aufbau her identisch. Sie unterscheiden sich intern nur in den I/O-Einheiten 19 und im ID-Generator 23, je nach Slavetyp.

## Patentansprüche

1. Verfahren zur seriellen Datenübertragung auf einem wenigstens eine Hinleitung (8) und eine Rückleitung (9) aufweisenden sowie mit mehreren Slaves (S1, S2,...) verbundenen Bus (10), über dessen Hinleitung (8) aufeinanderfolgende Datenrahmen (R1, R2,...) für einanderfolgende Slaves (S1, S2,...) verschickt werden, **dadurch gekennzeichnet, daß** jeder Slave (S1, S2,...) den für ihn vorgesehenen Datenrahmen (R1, R2,...) aus der Hinleitung (8) ausblendet und diesen nach Verarbeitung direkt zur Rückleitung (9) umleitet.

2. Verfahren nach Anspruch 1, **dadurch gekennzeichnet, daß** die umgeleiteten Datenrahmen (R'1, R'2,...) auf einer durch die Slaves (S1, S2,...) hindurchgeführten Rückleitung (9) zurückgeschickt werden.

3. Verfahren nach Anspruch 1, **dadurch gekennzeichnet, daß** die umgeleiteten Datenrahmen (R'1, R'2,...) auf einer außerhalb der Slaves (S1, S2,...) liegenden Rückleitung (9) zurückgeschickt werden.

4. Verfahren nach einem der Ansprüche 1 bis 3, **dadurch gekennzeichnet, daß** alle Slaves (S1, S2,...)zur selben Zeit auf Empfang geschaltet werden.

5. Verfahren nach Anspruch 4, **dadurch gekennzeichnet, daß** die Slaves (S1, S2,...) durch einen auf der Hinleitung (8) verschickten Startrahmen (ST) auf Empfang geschaltet werden, der den Datenrahmen (R1, R2,...) vorausgeht.

6. Verfahren nach Anspruch 4, **dadurch gekennzeichnet, daß** die Slaves (S1, S2,...) durch ein an die Rückleitung (9) angelegtes Steuersignal auf Empfang geschaltet werden, das vor dem Verschicken der Datenrahmen (R1, R2,...) ausgegeben wird.

7. Verfahren nach einem der Ansprüche 1 bis 6, **dadurch gekennzeichnet, daß** jeder Datenrahmen (R1, R2,...) ein an erster Position liegendes Startbit (SB) und ein an letzter Position liegendes Stopbit (StB) enthält.

8. Verfahren nach einem der Ansprüche 1 bis 7, **dadurch gekennzeichnet, daß** alle Datenrahmen (R1, R2,...) identisch strukturiert sind.

9. Verfahren nach Anspruch 8, **dadurch gekennzeichnet, daß** alle Slaves (S1, S2,...) in gleicher Weise bei der Ausblendung und Umleitung der für sie vorgesehenen Datenrahmen (R1, R2,...) arbeiten.

10. Vorrichtung zur seriellen Datenübertragung, mit
- einem wenigstens eine Hinleitung (8) und eine Rückleitung (9) aufweisenden Bus(10);
- mehreren mit dem Bus (10) verbundenen Slaves (S1, S2,...); und
- einem mit dem Bus (10) verbundenen Master (M), der über die Hinleitung (8) aufeinanderfolgende Datenrahmen (R1, R2,...) für aufeinanderfolgende Slaves (S1, S2,...) verschickt und über die Rückleitung (9) von den Slaves (S1, S2,...) kommende Datenrahmen (R1, R2,...) empfängt; **dadurch gekennzeichnet, daß** jeder Slave (S1, S2,...) folgendes enthält:
- eine mit der Hinleitung (8) verbundene Ausblendeinrichtung (15, 16, 17) zur Ausblendung des für ihn vorgesehenen Datenrahmens (R1, R2,...) aus der Hinleitung (8);
- eine Bearbeitungseinrichtung (18-25) zur Bearbeitung des ausgeblendeten Datenrahmens(R1, R2,...);und
- eine mit der Rückleitung (9) verbundene Umleiteinrichtung (26) zur Umleitung des von der Bearbeitungseinrichtung (18-25) bearbeiteten Datenrahmens (R1, R2,...) direkt zur Rückleitung (9).

11. Vorrichtung nach Anspruch 10, **dadurch gekennzeichnet, daß** die Ausblendeinrichtung (15, 16, 17) einen Ausblendschalter (17) zur Unterbrechung der Hinleitung (9) aufweist.

12. Vorrichtung nach Anspruch 11, **dadurch gekennzeichnet, daß** die Ausblendeinrichtung (15,16,17) eine Erkennungsschaltung (15) zum Erkennen eines vor allen Datenrahmen (R1, R2,...) übertragenen Startrahmens (ST) aufweist, um bei Erkennung des Startrahmens (ST) den Ausblendschalter (17) in die Unterbrechungsposition zu bringen.

13. Vorrichtung nach Anspruch 12, **dadurch gekennzeichnet, daß** die Erkennungsschaltung (15) ein zu Beginn eines jeweiligen Datenrahmens (R1, R2,...) liegendes Startbit (SB) erkennt und abhängig davon einen Zähler (16) aufzieht, der nach Zählablauf den Ausblendschalter (17) wieder in seine die Hinleitung (9) verbindende Position bringt.

14. Vorrichtung nach einem der Ansprüche 10 bis 13, **dadurch gekennzeichnet, daß** die Umleiteinrichtung (26) als dreipoliger Umschalter ausgebildet ist.

15. Vorrichtung nach einem der Ansprüche 10 bis 14, **dadurch gekennzeichnet, daß** alle Slaves (S1, S2,...) gleich ausgebildet sind.

## Claims

1. Method for the serial transmission of data on a bus (10) which has at least one forward line (8) and one return line (9) and is connected to a plurality of slaves (S1, S2,...) and via whose forward line (8) successive data frames (R1, R2,...) for successive slaves (S1, S2,...) are transmitted, **characterized in that** each slave (S1, S2,...) gates out from the forward line (8) the data frame (R1, R2,...) which is provided for it and diverts said data frame (R1, R2,...) directly to the return line (9) after processing.

2. Method according to Claim 1, **characterized in that** the diverted data frames (R'1, R'2,...) are transmitted back on a return line (9) which is routed through the slaves (S1, S2,...).

3. Method according to Claim 1, **characterized in that** the diverted data frames (R'1, R'2,...) are transmitted back on a return line (9) located outside the slaves (S1, S2,...).

4. Method according to one of Claims 1 to 3, **characterized in that** all the slaves (S1, S2,...) are switched to reception at the same time.

5. Method according to Claim 4, **characterized in that** the slaves (S1, S2,...) are switched to reception by a start frame (ST) which is transmitted on the forward line (8) and which precedes the data frame (R1, R2,...).

6. Method according to Claim 4, **characterized in that** the slaves (S1, S2,...) are switched to reception by a control signal which is applied to the return line (9) and which is output before the data frames (R1, R2,...) are transmitted.

7. Method according to one of Claims 1 to 6, **characterized in that** each data frame (R1, R2,...) contains a start bit (SB) which is located at the first position, and a stop bit (StB) which is located at the last position.

8. Method according to one of Claims 1 to 7, **characterized in that** all the data frames (R1, R2,...) are structured identically.

9. Method according to Claim 8, **characterized in that** all the slaves (S1, S2,...) operate in the same way during the gating out and diversion of the data frames (R1, R2,...) which are provided for them.

10. Device for the serial transmission of data, having
- a bus (10) which has at least one forward line (8) and one return line (9);
- a plurality of slaves (S1, S2,...) which are connected to the bus (10); and
- a master (M) which is connected to the bus (10) and which transmits successive data frames (R1, R2,...) for successive slaves (S1, S2,...) via the forward line (8), and receives data frames (R1, R2,...) which are coming from the slaves (S1, S2,...) via the return line (9); **characterized in that** each slave (S1, S2,...) contains the following:
- a gating-out device (15, 16, 17), connected to the forward line (8), for gating out from the forward line (8) the data frame (R1, R2,...) which is provided for said slave (S1, S2,...);
- a processing device (18-25) for processing the gated-out data frame (R1, R2,...); and
- a diverter device (26), connected to the return line (9), for diverting directly to the return line (9) the data frame (R1, R2,...) which has been processed by the processing device (18-25).

11. Device according to Claim 10, **characterized in that** the gating-out device (15, 16, 17) has a gating-out switch (17) for interrupting the forward line (9).

12. Device according to Claim 11, **characterized in that** the gating-out device (15, 16, 17) has a detection circuit (15) for detecting a start frame (ST) which is transmitted before all the data frames (R1, R2,...), in order to move the gating-out switch (17) into the interrupt position when the start frame (ST) is detected.

13. Device according to Claim 12, **characterized in that** the detection circuit (15) detects a start bit (SB) located at the start of a respective data frame (R1, R2,...), and, as a function of this, increments a counter (16) which, after the count has expired, moves the gating-out switch (17) back into its position connecting the forward line (9).

14. Device according to one of Claims 10 to 13, **characterized in that** the diverter device (26) is embodied as a three-pole change-over switch.

15. Device according to one of Claims 10 to 14, **characterized in that** all the slaves(S1**,** S2,...) are of identical design.

## Revendications

1. Procédé pour le transfert de données sériel sur un bus (10) présentant au moins une ligne aller (8) et une ligne retour (9) ainsi que connecté à divers esclaves (S1, S2, ...), par l'intermédiaire de la ligne aller (8) duquel on expédie des trames de données (R1, R2,...) successives pour des esclaves successifs (S1, S2, ...), **caractérisé en ce que** chaque esclave (S1, S2, ...) extrait la trame de données (R1, R2, ...) prévue pour lui de la ligne aller (8) et la fait directement dévier vers la ligne retour (9) après traitement.

2. Procédé selon la revendication 1, **caractérisé en ce que** les trames de données déviées (R'1, R'2, ...) sont renvoyées sur une ligne retour (9) qui passe à travers les esclaves (S1, S2, ...).

3. Procédé selon la revendication 1, **caractérisé en ce que** les trames de données déviées (R'1, R'2, ...) sont renvoyées sur une ligne retour (9) se situant à l'extérieur des esclaves (S1, S2, ...).

4. Procédé selon l'une quelconque des revendications 1 à 3, **caractérisé en ce que** tous les esclaves (S1, S2, ...) sont commutés en mode de réception au même moment.

5. Procédé selon la revendication 4, **caractérisé en ce que** les esclaves (S1, S2, ...) sont commutés en mode de réception par une trame de départ (ST) envoyée sur la ligne aller (8), laquelle trame de départ précède la trame de données (R1, R2, ...).

6. Procédé selon la revendication 4, **caractérisé en ce que** les esclaves (S1, S2,...) sont commutés en mode de réception par un signal de commande appliqué à la ligne retour (9), lequel signal est émis avant l'envoi des trames de données (R1, R2, ...).

7. Procédé selon l'une quelconque des revendications 1 à 6, **caractérisé en ce que** chaque trame de données (R1, R2, ...) contient un bit de départ (SB) se trouvant en première position et un bit d'arrêt (StB) se trouvant en dernière position.

8. Procédé selon l'une quelconque des revendications 1 à 7, **caractérisé en ce que** toutes les trames de données (R1, R2, ...) sont structurées de manière identique.

9. Procédé selon la revendication 8, **caractérisé en ce que** tous les esclaves (S1, S2, ...) fonctionnent de la même manière lors de l'extraction et de la déviation des trames de données (R1, R2, ...) prévues pour eux.

10. Dispositif pour le transfert de données sériel avec :
- un bus (10) présentant au moins une ligne aller (8) et une ligne retour (9) ;
- plusieurs esclaves (S1, S2, ... ) connectés au bus (10) ; et
- un maître (M) connecté au bus (10), lequel maître envoie des trames de données (R1, R2,...) successives par l'intermédiaire de la ligne aller (8) pour des esclaves successifs (S1, S2, ...) et lequel réceptionne des trames de données (R1, R2,...) provenant des esclaves (S1, S2,...) par l'intermédiaire de la ligne retour (9) ;
**caractérisé en ce que** chaque esclave (S1, S2,...) comprend ce qui suit :
- un dispositif d'extraction (15, 16, 17) connecté à la ligne aller (8) servant à extraire la trame de données (R1, R2, ...) prévue pour lui de la ligne aller (8) ;
- un dispositif de traitement (18-25) servant à traiter la trame de données extraite (R1, R2, ...) ; et
- un dispositif de déviation (26) connecté à la ligne retour (9) servant à faire dévier la trame de données (R1, R2, ...) traitée par le dispositif de traitement (18-25) directement vers la ligne retour (9).

11. Dispositif selon la revendication 10, **caractérisé en ce que** le dispositif d'extraction (15, 16, 17) présente un commutateur d'extraction (17) servant à couper la ligne aller (9).

12. Dispositif selon la revendication 11, **caractérisé en ce que** le dispositif d'extraction (15, 16, 17) présente un circuit de reconnaissance (15) servant à reconnaître une trame de départ (ST) transmettant essentiellement des trames de données (R1, R2, ...), afin de faire passer le commutateur d'extraction (17) en position de coupure lors de la reconnaissance de la trame de départ (ST).

13. Dispositif selon la revendication 12, **caractérisé en ce que** le circuit de reconnaissance (15) reconnaît un bit de départ (SB) situé au début d'une trame de données respective (R1, R2, ...) et remonte un compteur (16) en fonction de cela, lequel fait de nouveau passer le commutateur d'extraction (17) dans sa position de connexion de la ligne aller (9) après l'exécution du comptage.

14. Dispositif selon l'une quelconque des revendications 10 à 13, **caractérisé en ce que** le dispositif de déviation (26) est réalisé comme un commutateur tripolaire.

15. Dispositif selon l'une quelconque des revendications 10 à 14, **caractérisé en ce que** tous les esclaves (S1, S2, ...) sont réalisés de la même manière.
